# EUROPÄISCHE PATENTSCHRIFT

(11) **EP 1 611 146 B1**
(45) Veröffentlichungstag und Bekanntmachung des Hinweises auf die Patenterteilung: **14.11.2007**
(21) Anmeldenummer: 04722811.9
(22) Anmeldetag: 24.03.2004
(51) Int. Cl.: C07F 15/00

(54) **VERFAHREN ZUR HERSTELLUNG VON HOCHREINEN ORGANO-IRIDIUM-VERBINDUNGEN**
METHOD FOR PRODUCING HIGH-PURITY ORGANOIRIDIUM COMPOUNDS
PROCEDE DE FABRICATION DE COMPOSES ORGANO-IRIDIUM DE HAUTE PURETE

(30) Priorität: 27.03.2003 DE 10314102
(43) Veröffentlichungstag der Anmeldung: 04.01.2006
(73) Patentinhaber: Merck Patent GmbH, 64293 Darmstadt (DE)
(72) Erfinder: BACH, Ingrid, 65719 Hofheim (DE); STÖSSEL, Philipp, 60487 Frankfurt/Main (DE); SPREITZER, Hubert, 68519 Viernheim (DE)
(86) Internationale Anmeldenummer: PCT/EP2004/003087
(87) Internationale Veröffentlichungsnummer: WO 2004/085449

(56) Entgegenhaltungen:
- WO-A-02/060910

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als farbgebende Komponenten finden.

Bei den auf rein organischen Komponenten basierenden Organischen-Elektrolumineszenz-Vorrichtungen (allg. Beschreibung des Aufbaus siehe: US 4,539,507 und US 5,151,629) bzw. deren Einzelbauteilen, den Organischen-Lichtemittierenden-Dioden (OLEDs) bzw. auch Polymeren Lichtemittierenden-Dioden (PLEDs) ist die Markteinführung bereits erfolgt, wie die Autoradios mit "Organischem Display" der Firma Pioneer bzw. ein Rasierer der Firma Philips mit PLED-Display zeigen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.

Eine Entwicklung hierzu, die sich in den letzten Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].

Aus theoretischen Spin-statistischen Gründen ist unter Verwendung metallorganischer Verbindungen eine bis zu vierfache Energie- und Leistungseffizienz möglich. Ob sich diese neue Entwicklung durchsetzen wird, hängt zum einen stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.

Zum anderen muss der effiziente chemisch-synthetische Zugang zu den entsprechenden, hochreinen Organo-Iridium-Verbindungen gegeben sein. Dies ist insbesondere unter Berücksichtigung der Seltenheit von Iridium von maßgebender Bedeutung für die ressourcenschonende Nutzung der genannten Verbindungsklasse.

In der Literatur sind mehrere Verfahren zur Darstellung von tris-ortho-metallierten Organo-Iridium-Verbindungen beschrieben worden. Die allgemeinen Zugangswege, die durch diese erreichten Ausbeuten und ihre Nachteile sind im folgenden kurz am Grundkörper der genannten Verbindungsklasse, dem *fac*-Tris[2-(2-pyridinyl-κN)phenyl-κC]-iridium(III), dargelegt.

Ausgehend von hydratisiertem Iridium(III)-chlorid und 2-Phenylpyridin wurde *fac-*Tris[2-(2-pyridinyl-κN)phenyl-κC]-iridium(III), nach aufwendigen chromatographischen Reinigungsverfahren, in etwa 10 %iger Ausbeute erhalten [K. A. King, P. J. Spellane, R. J. Watts, J. Am. Chem. Soc., 1985, 107, 1431-1432].

K. Dedeian et al. beschreiben ein Verfahren ausgehend von Iridium(III)-tris(acetylacetonat) und 2-Phenylpyridin, nach dem *fac*-Tris[2-(2-pyridinyl-κN)phenyl-κC]-iridium(III) in 45 %iger Ausbeute erhalten wurde. Analog zum oben genannten Verfahren muss auch bei diesem Verfahren das Produkt durch chromatographische Verfahren von Verunreinigungen befreit werden, wobei hier - bedingt durch das Löslichkeitsverhalten - halogenierte Kohlenwasserstoffe zum Einsatz kommen [K. Dedeian, P. I. Djurovich, F. O. Garces, G. Carlson, R. J. Watts, Inorg. Chem., 1991, 30, 1685-1687].

In einem dritten bekannten Verfahren wird Di-µ-chlorotetrakis[2-(2-pyridinyl-κN)phenyl-κC]di-iridium(III), welches zunächst in ca. 72 %iger Ausbeute aus hydratisiertem Iridium(III)-chlorid und 2-Phenylpyridin dargestellt werden muss [S. Spouse, K. A. King, P. J. Spellane , R. J. Watts J. Am. Chem. Soc., 1984, 106, 6647], als Edukt verwendet. Dieses wird dann mit 2-Phenylpyridin und zweifach molaren Mengen an Silber-trifluormethansulfonat bezogen auf das Di-µ-chlorotetrakis[2-(2-pyridinyl-κN)phenyl-κC]di-iridium(III) umgesetzt. Nach chromatographischer Aufeinigung erhalten die Autoren Tris[2-(2-pyridinyl-κN)phenyl-κC]-iridium(III) in 75 %iger Ausbeute [M. G. Colombo, T. C. Brunold, T. Riedener, H. U. Güdel, Inorg. Chem., 1994, 33, 545-550]. Neben der chromatographischen Aufreinigung, die wiederum mit Hilfe von halogenierten Kohlenwasserstoffen erfolgt, ist die Verwendung von zweifach molaren Mengen an Silber-trifluormethansulfonat bezogen auf das Di-µ-chlorotetrakis[2-(2-pyridinyl-κN)phenyl-κC]di-iridium(III) nachteilig, unter anderem, weil Silberspuren kaum aus dem Produkt entfernt werden können.

Das bis dato beste Verfahren wurde von P. Stößel et al. in WO 02/060910 beschrieben. Dieses Verfahren, bestehend aus der Umsetzung von Iridium(III)-tris(acetylacetonat) bzw. eines ähnlichen 1,3-Diketo-chelat-komplexes, mit einer entsprechenden Pyridin-aryl oder -heteroaryl-Verbindung in Gegenwart eines dipolar protischen Lösemittels unter starkem Erhitzen für längere Zeit (> 20 h), ergibt sehr gute Ausbeuten (bis zu 96 %) und ebenfalls sehr gute Reinheiten (>99.9 %). Die Beschreibung in dieser Offenbarung ist sehr gut; bei Wiederholungsversuchen konnten die entsprechenden Angaben auch reproduziert werden; es fiel jedoch auf, dass in unregelmäßigen Abständen bzw. bei anderen Liganden die Synthese teilweise schlechter und unter Umständen gar nicht mehr funktionierte. Die Ursache hierfür war lange unklar.

In der nachfolgend aufgeführten Tabelle 1 sind diese Literaturangaben zur besseren Übersicht gegenübergestellt, inklusive des in Beispiel 1 durchgeführten Vergleichsexperiments.

**Tabelle 1 Literaturvergleich von bekannten Darstellungsverfahren.**

| | Zitat 1 | Zitat 2 | | Zitat 3 | Zitat 4 |
|---|---|---|---|---|---|
| | | Literatur | Vergleichsexp. | | |
| Edukte | IrCl₃ | Ir(acac)₃ | Ir(acac)₃ | [Ir(ppy)₂Cl]₂ | Ir(acac)₃ |
| | 2-Phenylpyridin | 2-Phenylpyridin | 2-Phenylpyridin | 2-Phenylpyridin | 2-Phenylpyridin |
| | | | | AgO₃SCF₃ | |
| Lösungsmittel | 2-Ethoxyethanol / Wasser | Ethylenglykol | Ethylenglykol | Keines | Ethylenglykol |
| Temperatur | --- | 196° - 198°C | 196 ° - 198 °C | 110 °C | Rückfluss |
| Konzentration an Iridium-Edukt | 0.03 mol/L | 0.02 mol/L | 0.02 mol/L | --- | 0.1 mol/L |
| Molares Verhältnis von Iridium-Edukt zu 2-Phenylpyridin | 1 : 4 | 1 : 6.3 | 1 : 6.3 | 1 : 15 | 1 : 10 |
| Reaktionszeit | 24 h | 10 h | 10 h | 24 h | 60 h |
| Ausbeute | ca. 10 % als Nebenprodukt von | 45% | 39.3-44.0% | 75% | 92-96% |
| | [Ir(µ-Cl)(ppy)]₂ | | | | |
| Reinheit nach HPLC | Keine Angabe | Keine Angabe | 94.0-96.0% | Keine Angabe | >99.9% |

| | | | | | |
|---|---|---|---|---|---|
| Zitat 1: K. A. King, P. J. Spellane, R. J. Watts, J. Am. Chem. Soc., 1985, 107, 1431 - 1432. S. Spouse, K. A. King, P. J. Spellane, R. J. Watts, J. Am. Chem. Soc., 1984, 106, 6647 - 6653. Zitat 2: K. Dedeian, P. I. Djurovich, F. O. Garces, G. Carlson, R. J. Watts Inorg. Chem., 1991, 30, 1685-1687. Zitat3: M. G. Colombo, T. C. Brunold, T. Riedener, H. U. Güdel Inorg. Chem., 1994, 33, 545-550. Zitat 4: P. Stößel et al., WO 02/060910**.** | | | | | |

Aus diesem Überblick ist einfach zu entnehmen, dass das Verfahren gemäß Zitat 4 den anderen bekannten Verfahren deutlich überlegen ist. Jedoch ergibt sich dabei das oben geschilderte Problem der schlechten Ausbeute bzw. der teilweise auftretenden Nicht-Reproduzierbarkeit bzw. Probleme bei Verwendung anderer Liganden.

Es wurde nun überraschend gefunden, dass ein Verfahren - wie es weiter unten beschrieben ist - ausgehend von Ir-Komplexen bzw. Mischungen derartiger Komplexe oder Mischungen enthaltend derartige Ir-Komplexe, welche zwar Acetylacetonat- bzw. Diketonat-Liganden besitzen, welche aber nicht die hohe Symmetrie des Iridium(Ill)-tris(acetylacetonat) aufweisen, deutlich bessere Ausbeuten bzw. kürzere Reaktionszeiten aufweisen als das Verfahren gemäß Zitat 4. Außerdem konnten damit v. a. die geschilderten "unerklärlichen" Reproduzierbarkeitsprobleme beseitigt und die Ausbeuten für weitere Ligandensysteme eindrucksvoll erhöht werden.

Gegenstand der vorliegenden Erfindung ist ein Verfahren zur Herstellung homoleptischer Ir(III) Komplexe der Formel (I), 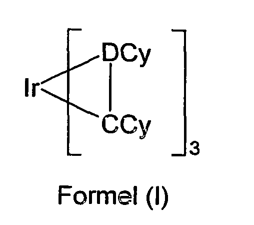 worin gilt:
- CyD: ist eine cyclische Gruppe, die mindestens ein Donoratom, bevorzugt Stickstoff oder Phosphor, enthält, über welches die cyclische Gruppe an das Metall gebunden ist, und die wiederum ein oder mehrere Substituenten R tragen kann; die Gruppen CyD und CyC sind über eine kovalente Bindung miteinander verbunden;
- CyC: ist eine cyclische Gruppe, die ein Kohlenstoffatom enthält, über welches die cyclische Gruppe an das Metall gebunden ist, und die wiederum ein oder mehrere Substituenten R tragen kann;
- R: ist gleich oder verschieden bei jedem Auftreten H, F, CI, Br, I, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, -CONR²-, -CO-O-, -CR¹=CR¹- oder -C≡C- ersetzt sein können und wobei ein oder mehrere H-Atome durch F ersetzt sein können, oder eine Aryl-, Aryloxy-, Arylamin- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können;
- R¹ und R²: sind gleich oder verschieden bei jedem Auftreten H oder ein aliphatischer oder aromatischer Kohlenwasserstoffrest mit 1 bis 20 C-Atomen,
gekennzeichnet durch die Umsetzung eines Iridium(III)-haltigen Eduktes, das mindestens eine Diketonat-Struktureinheit der Formel (II) enthält, 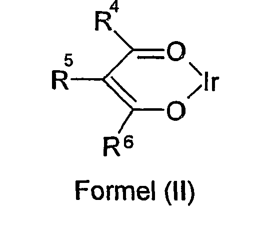 worin gilt:
- R⁴, R⁶: sind gleich oder verschieden bei jedem Auftreten eine lineare, cyclische oder verzweigte Alkylgruppe mit 1-20 Kohlenstoffatomen, wobei ein oder mehrere nicht benachbarte CH₂-Gruppen durch -O-, -S-, -NR¹-, -CONR²- , -CO-O-, -CR¹=CR¹- oder -C≡C- ersetzt sein können und wobei ein oder mehrere H-Atome durch F oder aromatische Gruppen mit jeweils 3 bis 14 C-Atomen ersetzt sein können, oder eine Aryl- und/oder Heteroarylgruppe mit 3-20 Kohlenstoffatomen oder eine Alkoxygruppe OR¹,
- R⁵: ist gleich oder verschieden bei jedem Auftreten eine lineare, cyclische oder verzweigte Alkylgruppe mit 1-20 Kohlenstoffatomen, wobei ein oder mehrere nicht benachbarte CH₂-Gruppen durch -O-, -S-, -NR¹-, -CONR²- , -CO-O-, -CR¹=CR¹- oder -C≡C- ersetzt sein können und wobei ein oder mehrere H-Atome durch F oder aromatische Gruppen mit jeweils 3 bis 14 C-Atomen ersetzt sein können, oder eine Aryl- und/oder Heteroarylgruppe mit 3-20 Kohlenstoffatomen,
- R¹ und R²: sind gleich oder verschieden bei jedem Auftreten H oder ein aliphatischer oder aromatischer Kohlenwasserstoffrest mit 1 bis 20 C-Atomen,
ausgenommen homoleptische Diketonat-Komplexe der Formel (II) und Verbindungen der Formel (II), die zwei Liganden der Formel (III) enthalten, 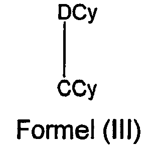 wobei die Reste CyC und CyD in Formel (III) die unter Formel (I) genannten Bedeutungen haben, mit einer Verbindung der Formel (IV), 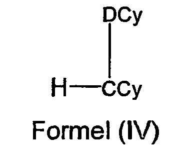 worin die Reste CyD und CyC die unter Formel (I) genannten Bedeutungen haben.

Das bei der Umsetzung entstehende Diketon wird mittels bekannter Methoden abgetrennt und die Zielverbindung isoliert.

Unter einem homoleptischen Komplex wird eine Komplex-Verbindung verstanden, in der nur gleichartige Liganden an ein Metall gebunden sind. Das Gegenteil davon wäre ein heteroleptischer Komplex, in dem unterschiedliche Liganden an ein Metall gebunden sind.

Das erfindungsgemäße Verfahren wird durch das Schema 1 erläutert.

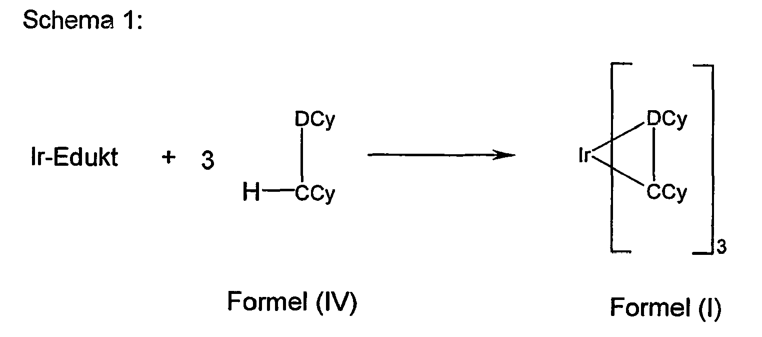

Bevorzugte erfindungsgemäße Iridium(III)-haltige Edukte gemäß Formel (11) sind dadurch gekennzeichnet, dass sie eine Struktur gemäß der Formel (V) enthalten, 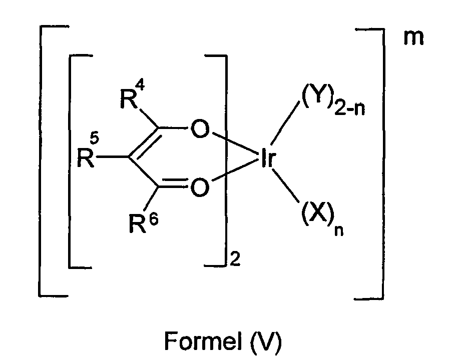 wobei R⁴, R⁵, R⁶ die unter Formel (II) angegebenen Bedeutungen haben und das Iridiummetall 6-fach koordiniert ist von den vier Sauerstoffatomen der Diketonat-Liganden und zwei einzähnigen Liganden, die entweder anionisch (X) oder neutral (Y) sein können; dabei kann n = 0, 1 oder 2 sein. Der Komplex ist negativ geladen (m = 1-), wenn n gleich 2 ist, der Komplex ist neutral (m = 0) für n = 1 und positiv (m = 1+) geladen für n = 0. Die einzähnigen Liganden X und Y können *cis* oder *trans* zueinander stehen.

Bevorzugte erfindungsgemäße Iridium(III)-haltige Edukte enthalten eine Verbindung gemäß der Formel (V), worin X bei jedem Auftreten gleich oder verschieden ein Fluorid-, Chlorid-, Bromid-, lodid-Anion ist.

Besonders bevorzugte Iridium(III)-haltige Edukte enthalten eine Verbindung der Formel (XI), 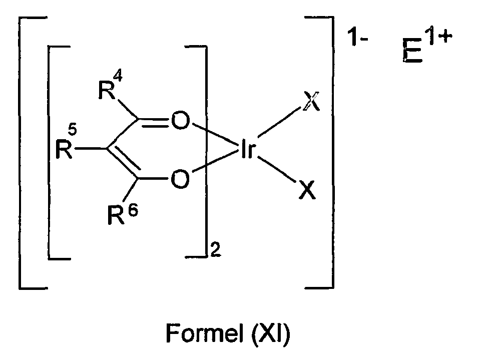 wobei R⁴, R⁵, R⁶ die unter Formel (II) angegebenen Bedeutungen haben, X gleich oder verschieden bei jedem Auftreten ein Cl-, Br- oder 1-Anion ist und E ein Alkalikation, Ammonium- oder Phosphoniumion ist. Die einzähnigen Liganden X können *cis* oder *trans* zueinander stehen.

Ebenfalls bevorzugt sind Iridium(III)-haltige Edukte, die eine Struktur der Formel (VI) enthalten, 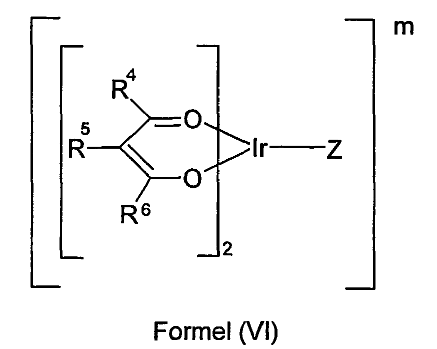 wobei R⁴, R⁵, R⁶ die unter Formel (II) angegebenen Bedeutungen haben und wobei Z als ein zweizähniger und/oder verbrückender Ligand chelatisierend am Iridium gebunden ist und entweder ein neutraler Ligand Z⁰, wie z. B. Bipyridin , Phenanthrolin, Ethylendiamin, Propylendiamin oder 2-, 3- bzw. 4-Aminopyridin, ist oder ein monoanionischer zweizähniger Ligand Z¹, wie z. B. Diketonat, Carboxylat, Picolinat, Aminocarboxylat oder 1-Ketoalkoholat, oder ein dianionischer zweizähniger Ligand Z², wie z. B. Oxalat, Maleonat, Phthalat, iso-Phthalat, Terephthalat, Oxid oder Peroxid ist. m ist 1+ für Z = Z⁰, 0 für Z = Z¹ und 1- für Z = Z².

Bevorzugt sind weiterhin erfindungsgemäße Iridium(III)-haltige Edukte, die Strukturen gemäß der Formel (VII) enthalten, 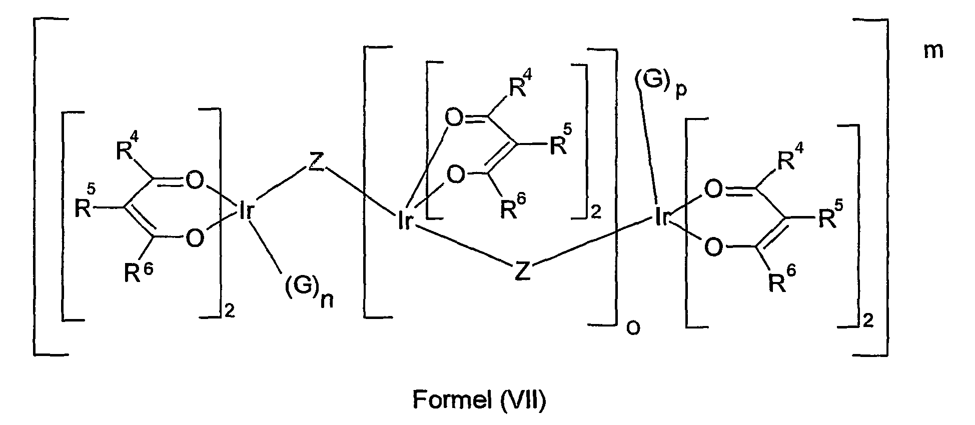 worin R⁴, R⁵, R⁶ die unter Formel (II) angegebenen Bedeutungen haben und der Ligand Z, statt wie in Formel (VI) chelatisierend, verbrückend gebunden ist, so dass mehrere Iridium-Metallatome, die zugleich von zwei Diketonat-Liganden koordiniert werden, zu oligomer- (o ≥ 2) und polymerartigen Strukturen (o bis zu 100000) verbunden werden. G ist gleich oder verschieden bei jedem Auftreten entweder ein monovalentes Anion X oder ein neutraler einzähniger Ligand Y. n und p sind bei jedem Auftreten gleich oder verschieden 0 oder 1. Je nach Wahl zwischen neutralen, monoanionischen und dianionischen zweizähnigen und/oder verbrückenden Liganden Z, sowie zwischen neutralen und monoanionischen einzähnigen Liganden als Endgruppen G ergeben sich Strukturen, die mehrfach positiv oder negativ geladen oder neutral sind.

Ebenfalls bevorzugt sind erfindungsgemäße Iridium(III)-haltige Edukte, die Strukturen gemäß der Formel (VIII) enthalten, 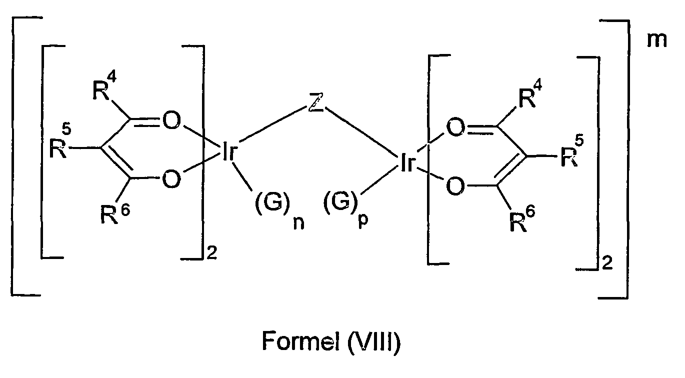 worin R⁴, R⁵, R⁶ die unter Formel (II) angegebenen Bedeutungen haben und der zweizähnige und/oder verbrückend gebundene Ligand Z, der neutral (Z⁰), monoanionisch (Z¹) oder dianionisch (Z²) sein kann, zwei Iridium-Metallatome verbindet, die bereits von zwei chelatisierend gebundenen Diketonat-Liganden koordiniert werden und jeweils noch an einen einzähnigen neutralen oder anionischen Liganden (G) gebunden sein können. n und p sind bei jedem Auftreten gleich oder verschieden 0 oder 1.

Durch geeignete Wahl der Liganden Z und G ergeben sich Strukturen gemäß der Formel (VIII), die ein- oder zweifach negativ (m = 1- oder 2-), wie auch ein- oder zweifach positiv (m = 1+ oder 2+) oder neutral sein (m = 0) können. Der verbrückende Ligand Z und der einzähnige Ligand G können cis oder *trans* zueinander am Iridium-Metall gebunden sein.

Bevorzugt sind weiterhin erfindungsgemäße Iridium(III)-haltige Edukte, die Strukturen gemäß der Formel (IX) enthalten, 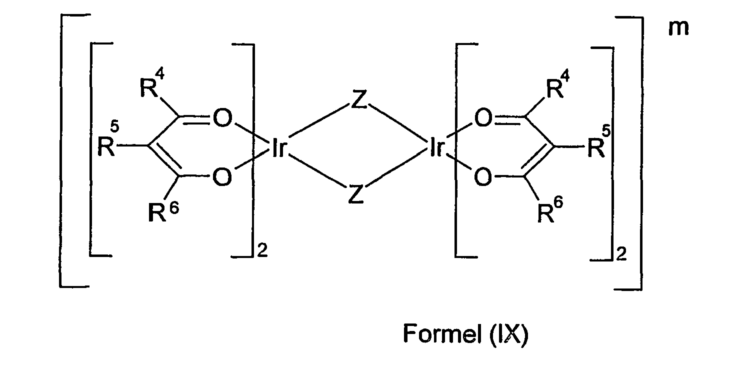 wobei R⁴, R⁵, R⁶ die unter Formel (II) angegebenen Bedeutungen haben und die Liganden Z über zwei Iridium-Metallatome verbrückend gebunden sind. Je nach Wahl von Z können die Iridium-haltigen Edukte zweifach negativ (m = 2-) bis zu zweifach positiv geladen sein. (m = 2+). Einfache Ladungen oder neutrale Iridiumhaltige Edukte sind ebenfalls möglich. Das Iridium ist des Weiteren von vier Sauerstoffatomen der Diketonat-Liganden koordiniert.

Besonders bevorzugt sind Iridium(III)-haltige Edukte, die Strukturen gemäß Formel (VI), (VII), (VIII) oder (IX) enthalten, dadurch gekennzeichnet, dass die neutralen zweizähnigen und/oder verbrückenden Liganden Z⁰ gleich oder verschieden bei jedem Auftreten Bipyridin, Phenanthrolin, Ethylendiamin, Propylendiamin oder 2-, 3- bzw. 4-Aminopyridin sind.

Ebenfalls besonders bevorzugt sind Iridium(III)-haltige Edukte, die Strukturen gemäß Formel (VI),(VII), (VIII) oder (IX) enthalten, dadurch gekennzeichnet, dass die monoanionischen zweizähnigen und/oder verbrückende Liganden Z¹ gleich oder verschieden bei jedem Auftreten Acetylacetonat, Carboxylat, wie z. B. Formiat, Acetat oder Propionat, Picolinat, Aminocarboxylat, wie z. B. 2-Aminoacetat oder 3-Aminopropionat, 1-Ketoalkoholate, wie z. B. Tropolonat, Benzoin, Azid, Cyanat, Isocyanat, Thiocyanat, Isothiocyanat, Halogenide, wie z. B. Chlorid, Bromid und Iodid, sind.

Ebenfalls besonders bevorzugt sind Iridium(III)-haltige Edukte, die Strukturen gemäß der Formel (VI), (VII), (VIII) oder (IX) enthalten, in denen die dianionischen zweizähnigen und/oder verbrückende Liganden Z² Oxalat, Maleonat, Phthalat, *iso-*Phthalat, Terephthalat, Oxid oder Peroxid sind.

Darüberhinaus sind ebenfalls erfindungsgemäße Iridium(III)-haltige Edukte bevorzugt, die Strukturen gemäß der Formel (X) enthalten, 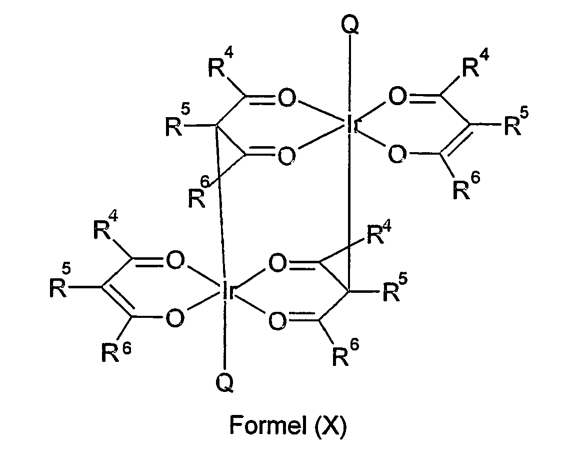 wobei R⁴, R⁵, R⁶ die unter Formel (II) angegebenen Bedeutungen besitzen und Q ein monoanionischer einzähniger Ligand X oder ein β-Diketonat, das über das Kohlenstoffatom zwischen den beiden Keto-Kohlenstoffatomen an das Metall gebunden ist.

Besonders bevorzugt sind Iridium(III)-haltige Edukte, die Strukturen gemäß der Formel (X) enthalten, wobei Q ein Fluorid-, Chlorid-, Bromid- oder Iodid-Ion ist.

Besonders bevorzugt sind Iridium(III)-haltige Edukte, die Strukturen gemäß der Formel (V), (VII), (VIII) und/oder (IX) enthalten und worin X bei jedem Auftreten gleich oder verschieden ein monovalentes Anion, wie OH⁻, F⁻, Cl⁻, Br⁻, I⁻, SCN⁻, CN⁻, SH⁻, SeH⁻, N₃⁻, Alkoholat, Nitrat⁻, Carboxylat der Formel R¹COO⁻, Cyclopentadienid (C₅H₅⁻) oder Hydrid (H⁻), ist.

Ebenfalls besonders bevorzugt sind Iridium(III)-haltige Edukte, die Strukturen gemäß der Formel (V), (VII) und/oder (VIII) enthalten und worin Y bei jedem Auftreten gleich oder verschieden ein neutraler einzähniger Ligand, wie H₂O, H₂S, ein Dialkylsulfid der Formel (R¹)₂S, ein Dialkylsulfoxid (R¹)₂SO, NH₃, ein primäres, sekundäres oder tertiäres Amin, ein Alkohol der Formel R¹OH, ein Ether der Formel (R¹)₂O, ein Thiol der Formel R¹SH, Pyridin, Chinolin, ein Nitril der Formel R¹CN, CO, ein Phosphin der Formel P(R¹)₃, ein Phosphinoxid der Formel OP(R¹)₃, ein Arsin der Formel As(R¹)₃ oder ein Phosphit der Formel P(OR¹)₃, ist.

Erfindungsgemäße Iridium(III)-haltige Edukte sind ebenfalls Gemische von mindestens 2 Iridium(III)-haltigen Edukten, die Strukturen der Formel (II), bzw. (V) bis (XI) enthalten.

Mit der hier erläuterten Synthesemethode lassen sich Iridiuni(III)-Komplexe gemäß der Formel (I) unter anderem aus den im Folgenden exemplarisch abgebildeten Iridium(III)-haltigen Edukten (1) bis (12) herstellen.

| | | |
|---|---|---|
| 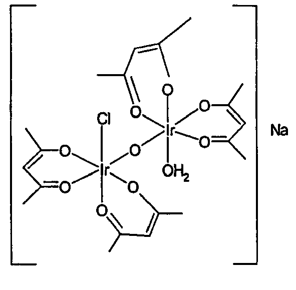 | 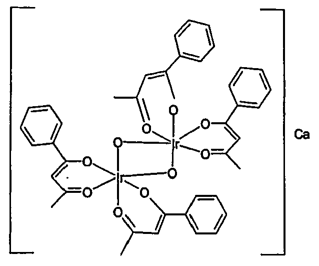 | 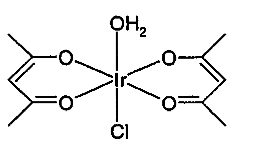 |
| Edukt (1) | Edukt (2) | Edukt(3) |
| 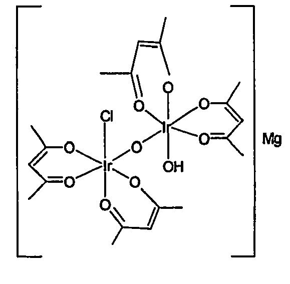 | 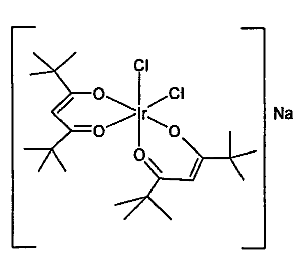 | 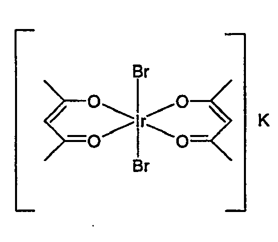 |
| Edukt (4) | Edukt (5) | Edukt (6) |
| 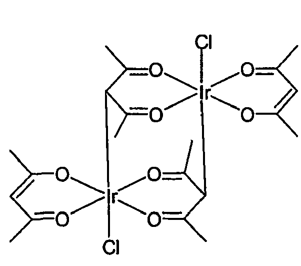 | 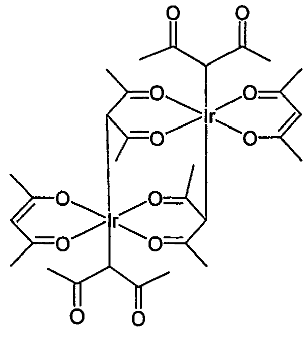 | 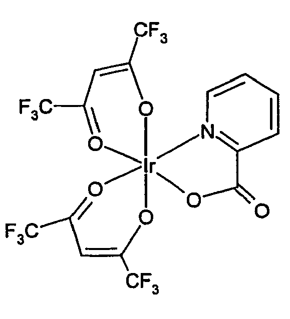 |
| Edukt (7) | Edukt (8) | Edukt (9) |
| 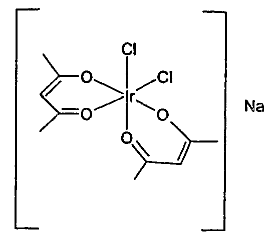 | 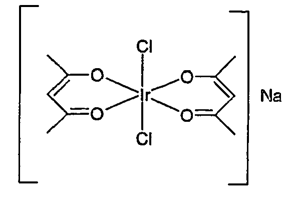 | 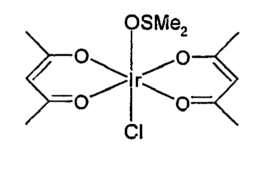 |
| Edukt (10) | Edukt (11) | Edukt (12) |
| 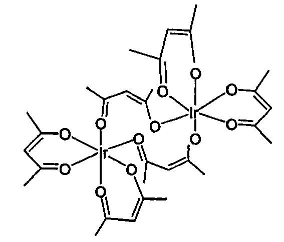 | | |
| Edukt (13) | | |

Erfindungsgemäße Reaktionsmedien sind hochsiedende dipolar-protische Lösungsmittel, wie Ethylenglykol oder Propylenglykol, bzw. auch höhere Diole oder Polyalkohole, wie z. B. Glycerin, bzw. auch Polyether-alkohole, wie Polyethylenglykole, beispielsweise PEG600 und PEG1000, sowie deren veretherte Analoga, wie z. B. Triethylenglykoldimethylether oder Poly(ethylenglykol)-dimethylether, sowie NMP.

Erfindungsgemäß wird die Umsetzung in einem Temperaturbereich von 100 °C bis 250 °C durchgeführt.

Erfindungsgemäß liegt die Konzentration des Iridium(III)-haltigen Edukts im Bereich von 0.05 bis 1.00 molar.

Das erfindungsgemäße molare Verhältnis des Iridium(III)-haltigen Edukts zum Liganden gemäß der Formel (IV) beträgt 1:4 bis 1:20, bevorzugt ist ein Verhältnis von 1:6 bis 1:15, besonders bevorzugt ist ein Verhältnis von 1:8 bis 1:12.

Die bevorzugte Konzentration des Edukts der Formel (IV) liegt im Bereich von 0.50 bis 10.00 molar, besonders bevorzugt im Bereich von 0.80 bis 2.50 molar. Erfindungsgemäß wird die Reaktion innerhalb von 20 bis 120 h durchgeführt, bevorzugt im Bereich von 30 bis 60 h. Eine Unterschreitung der genannten Reaktionszeit kann einen unvollständigen Umsatz des eingesetzten Iridium(III)-haltigen Edukts zur Folge haben, was zu Ausbeuteverlusten und zu Verunreinigung des Produkts mit Iridium(III)-haltigem Edukt oder Zwischenstufen führt.

Wie den Beispielen zu entnehmen, sind einige der Verbindungen gemäß der Formel (I) über ein dem bisherigen Stand der Technik gemäßen Verfahren nur in sehr moderaten Ausbeuten und Reinheiten erhältlich. Das erfindungsgemäße Verfahren eröffnet teils erst den Zugang zu Iridium(III)-Komplexen gemäß der Formel (I).

Die vorliegende Erfindung wird durch die nachfolgenden Beispiele näher erläutert, ohne diese jedoch auf die Beispiele einschränken zu wollen. Dem Fachmann auf dem Gebiet der organischen Synthese ist es hiermit ohne weitere erfinderische Tätigkeit möglich, an weiteren Systemen - wie oben beschrieben - die erfindungsgemäßen Umsetzungen durchzuführen.

### Beispiele:

### Synthese von tris-ortho-metallierten Organo-Iridium-Verbindungen:

Die nachfolgenden Synthesen wurden bis zur Aufarbeitung unter einer trockenen Rein-Stickstoffatmosphäre oder -Argonatmosphäre unter Verwendung sorgfältig getrockneter Lösungsmittel durchgeführt. Die verwendeten Edukte wurden von ALDRICH (Ethylenglykol), ABCR (Na[Ir(acac)₂Cl₂]) und Heräus (Iridium(III)acetylacetonat) bezogen.

Die Liganden 1-Phenylisochinolin, 2-Phenylpyridin, 2-Benzothiophen-2-yl-pyridin wurden nach literaturbekannten Methoden durch Suzuki-Kupplung aus der entsprechenden Boronsäure und 2-Brompyridin bzw. 1-Ghlorisochinolin hergestellt.

Die Synthesen sind in Tabelle 2 zusammengefasst, wobei die Beispiele 1, 3 und 5 Vergleichsbeispiele gemäß Stand der Technik sind und die Beispiele 2, 4 und 6 erfindungsgemäße Beispiele sind.

**Tabelle 2:**

| Beispiel | Ligand *** | Ir Gehalt (gew%) | Iridium(III)-haltiges Edukt | Ausbeute | Reinheit |
|---|---|---|---|---|---|
| 1* | ppy | 39,29 | Ir(acac)₃ | 65.2 - 67.5% | >98%ig |
| 2* | ppy | 39,69 | Na[Ir(acac)₂Cl₂] | 90.1 - 93.6% | >99.9%ig |
| 3** | piq | 39,29 | Ir(acac)₃ | 40.3 - 42.8% | >99.0%ig |
| 4** | piq | 39,69 | Na[Ir(acac)₂Cl₂] | 87.9 - 91.7% | >99.8%ig |
| 5** | btp | 39,29 | Ir(acaC)₃ | 52.3 - 55.4% | >37.4%ig |
| 6** | btp | 39,69 | Na[Ir(acac)₂Cl₂] | 86.9 - 89.7 % | >99.1%ig |

| | | | | | |
|---|---|---|---|---|---|
| *40 h bei 200 °C, kürzere Reaktionszeit als in WO 02/060910 beschrieben ** 40 h bei 180 °C ***ppy (2-Phenylpyridin), btp (2-Benzothiophen-2yl-pyridin), piq (1-Phenylisochinolin) | | | | | |

### Beispiel 1 (Vergleichsbeispiel): fac-Tris[2-(2-pyridinyl-κN)phenyl-κC]-iridium(III) (gemäß: P. Stößel et al., WO 02/060910)

Zu 100 ml entgastem Ethylenglykol wurden 4.90 g (10.0 mmol) Iridium(III)-acetylacetonat und 15.52 g (14.3 ml, 100 mmol) 2-Phenylpyridin gefügt. Die Suspension wurde unter gutem Rühren 40 h unter Rückfluss (200-210 °C Ölbadtemperatur) erhitzt. Nach Abkühlen auf Raumtemperatur wurde zu der Reaktionsmischung, die das Produkt *fac-*Tris[2-(2-pyridinyl-κN)phenyl-κC]-iridium(III) in Form eines gelben, feinkristallinen Niederschlags enthielt, unter Rühren eine Mischung aus 240 ml Ethanol und 60 ml wässriger 1 N Salzsäure gegossen. Nach 5 minütigem Rühren wurde über eine Glasfilternutsche (P3) abgesaugt, der gelbe, feinkristalline Niederschlag wurde dreimal mit 30 ml eines Gemischs aus Ethanol und wässriger 1 N Salzsäure (4:1, v:v), fünfmal mit 30 ml eines Gemischs aus Ethanol und Wasser (1:1, v:v) und fünfmal mit 30 ml Ethanol gewaschen und anschließend im Hochvakuum 5 h bei 80 °C und 2 h bei 200 °C getrocknet.

Die Ausbeute - bei einer Reinheit von > 98% nach NMR - betrug 4.27- 4.42 g entsprechend 65.2 - 67.5 %.
¹H NMR (CDCl₃): [ppm] = 7.84 (m, 3 H), 7.58 (m, 6 H), 7.48 (m, 3 H), 6.82 (m, 6 H), 6.69 (m, 6 H).

### Beispiel 2 (erfindungsgemäß): fac-Tris[2-(2-pyridinyl-κN)phenyl-κC]-iridium(III)

Durchführung analog zu Beispiel 1, wobei Iridium(III)acetylacetonat durch 4.84 g Na[Ir(acac)₂Cl₂] (Gehalt Ir 39.69%) (10.0 mmol) ersetzt wurde.

Die Ausbeute - bei einer Reinheit von > 99.9% nach HPLC - betrug 5.90 - 6.13 g entsprechend 90.1 - 93.6%.
¹H NMR (CDCl₃): [ppm] = siehe Beispiel 1

### Beispiel 3 (Vergleichsbeispiel): fac-Tris[2-(2-isochinolinyl-κN)phenyl-κC]-iridium(III)

Zu 100 ml entgastem Ethylenglykol wurden 4.90 g (10.0 mmol) Iridium(III)-acetylacetonat und 20.53 g (100 mmol) 1-Phenylisochinolin gefügt. Die Suspension wurde unter gutem Rühren 40 h unter Rückfluss (180 °C Ölbadtemperatur) erhitzt. Nach Abkühlen auf Raumtemperatur wurde zu der Reaktionsmischung, die das Produkt fac-Tris[2-(2-isochinolinyl-κN)phenyl-κN]-iridium(III) in Form eines roten, feinkristallinen Niederschlags enthielt, unter Rühren eine Mischung aus 240 ml Ethanol und 60 ml wässriger 1 N Salzsäure gegossen. Nach 5 minütigem Rühren wurde über eine Glasfilternutsche (P3) abgesaugt, der rote, feinkristalline Niederschlag wurde dreimal mit 30 ml eines Gemischs aus Ethanol und wässriger 1 N Salzsäure (4:1, v:v), fünfmal mit 30 ml eines Gemischs aus Ethanol und Wasser (1:1, v:v) und fünfmal mit 30 ml Ethanol gewaschen und anschließend im Hochvakuum 5 h bei 80 °C und 2 h bei 200 °C getrocknet.

Die Ausbeute - bei einer Reinheit von > 99.0% nach HPLC - betrug 3.24 - 3.45 g entsprechend 40.3 - 42.8 %.
¹H NMR (CDCl₃): [ppm] = 8,96 (m, 3 H), 8.19 (m, 3 H), 7.73 (m, 3 H), 7.63 (m, 6 H), 7.15 (d, 3 H), 7.10 (d, 3 H), 6.97 (m, 6 H), 6:86 (m, 3 H).

### Beispiel 4 (erfindungsgemäß): fac-Tris[2-(1-isochinolinyl-κN)phenyl-κC]-iridium(III)

Durchführung analog zu Beispiel 3, wobei Iridium(III)acetylacetonat durch 4.84 g Na[lr(acac)₂Cl₂] (Gehalt Ir 39.69%) (10.0 mmol) ersetzt wurde.

Die Ausbeute - bei einer Reinheit von > 99.8% nach HPLC - betrug 7.08 - 7.38 g entsprechend 87.9 - 91.7 %.
¹H NMR (DMSO): [ppm] = siehe Beispiel 3.

### Beispiel 5 (Vergleichsbeispiel): fac-Tris[2-(2-pyridinyl-κN) benzo[b]thien-3-yl-κC]-iridium(III)

Zu 100 ml entgastem Ethylenglykol wurden 4.90 g (10.0 mmol) Iridium(III)-acetylacetonat und 21.13 g (100 mmol) 2-Benzothien-2-ylpyridin gefügt. Die Suspension wurde unter gutem Rühren 40 h unter Rückfluss (180 °C Ölbadtemperatur) erhitzt. Nach Abkühlen auf Raumtemperatur wurde zu der Reaktionsmischung, die das Produkt *fac*-Tris[2-(2-pyridinyl-κN) benzo[b]thien-3-yl-κC]-iridium(III) in Form eines rotbraunen, feinkristallinen Niederschlags enthielt, unter Rühren eine Mischung aus 240 ml Ethanol und 60 ml wässriger 1 N Salzsäure gegossen. Nach 5 minütigem Rühren wurde über eine Glasfilternutsche (P3) abgesaugt, der rotbraune, feinkristalline Niederschlag wurde dreimal mit 30 ml eines Gemischs aus Ethanol und wässriger 1 N Salzsäure (4:1, v:v), fünfmal mit 30 ml eines Gemischs aus Ethanol und Wasser (1:1, v:v) und fünfmal mit 30 ml Ethanol gewaschen und anschließend im Hochvakuum 5 h bei 80 °C und 2 h bei 200 °C getrocknet.

Die Ausbeute - bei einer Reinheit von > 37.4% nach HPLC - betrug 4.30 -.4.56 g entsprechend 52.2 - 55.4 %.
¹H NMR (CD₂Cl₂): [ppm] = 7.73 (m, 3 H), 7.53 (m, 6 H), 7.35 (m, 3 H), 7.05 (m, 3 H), 6.76 (m, 3 H), 6.63 (m, 3H), 6.56 (m, 3H).

### Beispiel 6 (erfindungsgemäß): fac-Tris[2-(2-pyridinyl-κN) benzo[b]thien-3-yl-κC]-iridium(III)

Durchführung analog zu Beispiel 3, wobei Iridium(III)acetylacetonat durch 4.84 g Na[Ir(acac)₂Cl₂] (Gehalt Ir 39.69%) (10.0 mmol) ersetzt wurde.

Die Ausbeute - bei einer Reinheit von > 99.1 % nach HPLC - betrug 7.15 - 7.38 g entsprechend 86.9 - 89.7 %.
¹H NMR (CD₂Cl₂): [ppm] = siehe Beispiel 5.

## Patentansprüche

1. Verfahren zur Herstellung homoleptischer Ir(III)-Komplexe der Formel (I), 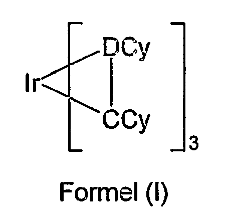 worin gilt:
CyD ist eine cyclische Gruppe, die mindestens ein Donoratom enthält, über welches die zyklische Gruppe an das Metall gebunden ist, und die wiederum ein oder mehrere Substituenten R tragen kann; die Gruppen CyD und CyC sind über eine kovalente Bindung miteinander verbunden;
CyC ist eine cyclische Gruppe, die ein Kohlenstoffatom enthält, über welches die cyclische Gruppe an das Metall gebunden ist und die wiederum ein oder mehrere Substituenten R tragen kann;
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-,-CONR²- , -CO-O-, -CR¹=CR¹- oder -C≡C- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können;
R¹ und R² sind gleich oder verschieden bei jedem Auftreten H oder ein aliphatischer oder aromatischer Kohlenwasserstoffrest mit 1 bis 20 C-Atomen,
**gekennzeichnet durch** die Umsetzung eines Iridium(III)-haltigen Eduktes, das mindestens eine Diketonat-Struktureinheit der Formel (II) enthält, 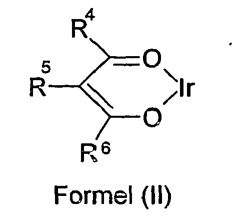 worin gilt:
R⁴, R⁶ sind gleich oder verschieden bei jedem Auftreten eine lineare, verzweigte oder cyclische Alkylgruppe mit 1-20 Kohlenstoffatomen, wobei ein oder mehrere nicht benachbarte CH₂-Gruppen **durch** -O-, -S-, -NR¹-, -CONR²- -CO-O-, -CR¹=CR¹- oder -C≡C- ersetzt sein können und wobei ein oder mehrere H-Atome **durch** F oder aromatische Gruppen mit je 3 bis 14 C-Atomen ersetzt sein können, oder eine Aryl- und/oder Heteroarylgruppe mit 3-20 Kohlenstoffatomen oder eine Alkoxygruppe OR¹,
R⁵ ist gleich oder verschieden bei jedem Auftreten eine lineare oder verzweigte Alkylgruppe mit 1-20 Kohlenstoffatomen, wobei ein oder mehrere nicht benachbarte CH₂-Gruppen **durch** -O-, -S-, -NR¹-, -CONR²- , -CO-O-, -CR¹=CR¹- oder -C≡C- ersetzt sein können und wobei ein oder mehrere H-Atome **durch** F oder aromatische Gruppen mit je 3 bis 14 C-Atomen ersetzt sein können, oder eine Aryl- und/oder Heteroarylgruppe mit 3-20 Kohlenstoffatomen,
R¹ und R² sind gleich oder verschieden bei jedem Auftreten H oder ein aliphatischer oder aromatischer Kohlenwasserstoffrest mit 1 bis 20 C-Atomen,
ausgenommen homoleptische Diketonat-Komplexe der Formel (II) und Verbindungen der Formel (II), die zwei Liganden der Formel (III) enthalten, 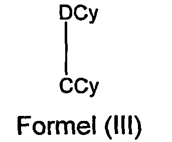 wobei die Symbole CyC und CyD in Formel (III) die unter Formel (I) genannten Bedeutungen haben,
mit einer Verbindung der Formel (IV), 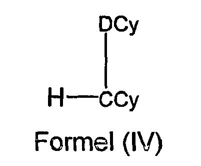 worin die Symbole CyD und CyC die unter Formel (I) genannten Bedeutungen haben.

2. Verfahren gemäß Anspruch 1, **dadurch gekennzeichnet, dass** das Iridium(III)-haltige Edukt eine Struktur gemäß der Formel (V) enthält, 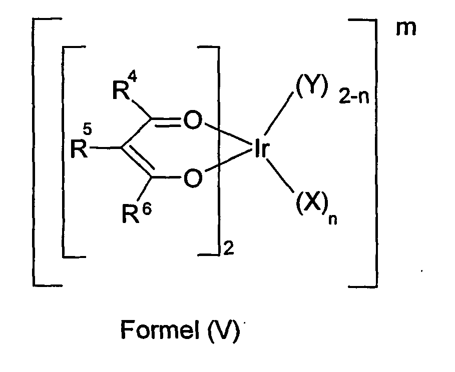 wobei die Symbole R⁴, R⁵, R⁶ die Bedeutungen wie in Anspruch 1 haben,
X bei jedem Auftreten gleich oder verschieden ein monovalentes Anion ist,
Y bei jedem Auftreten gleich oder verschieden ein neutraler einzähniger Ligand ist,
n 0, 1 oder 2 ist und
m 1- ist für n = 2, 0 ist für n = 1 oder 1+ ist für n = 0.

3. Verfahren gemäß Anspruch 1, **dadurch gekennzeichnet, dass** das Iridium(III)-haltige Edukt eine Struktur gemäß der Formel (VI) enthält, 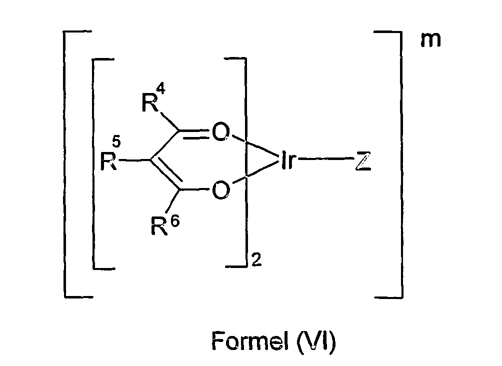 wobei R⁴, R⁵, R⁶ die Bedeutungen wie in Anspruch 1 haben und wobei
Z gleich oder verschieden bei jedem Auftreten
ein neutraler zweizähniger und/oder verbrückender Ligand Z⁰,
ein monoanionischer zweizähniger und/oder verbrückender Ligand Z¹ oder ein dianionischer zweizähniger und/oder verbrückender Ligand Z² ist, und
m 1+ ist für Z = Z⁰, 0 ist für Z = Z¹ und 1- ist für Z = Z².

4. Verfahren gemäß Anspruch 1, **dadurch gekennzeichnet, dass** das Iridium(III)-haltige Edukt eine Struktur gemäß der Formel (VII) enthält, 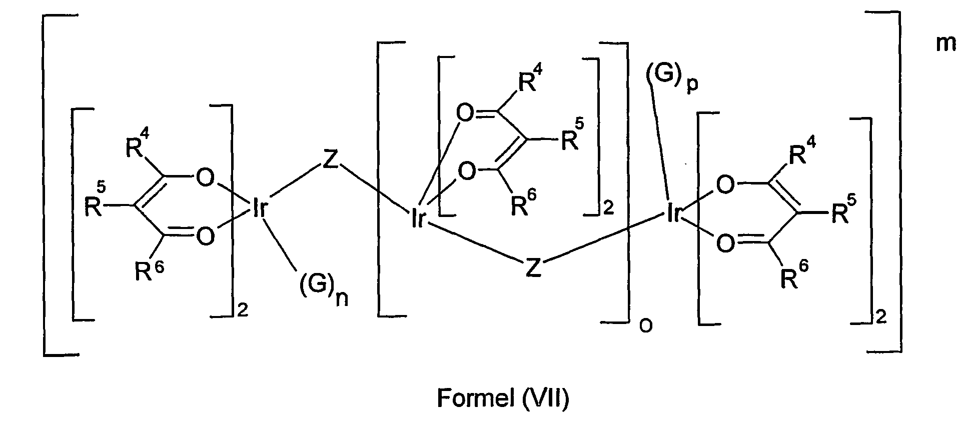 wobei R⁴, R⁵, R⁶ und Z die Bedeutungen wie in Anspruch 1 und Anspruch 3 haben,
G gleich oder verschieden bei jedem Auftreten entweder ein monovalentes Anion X oder ein neutraler einzähniger Ligand Y ist,
n, p bei jedem Auftreten gleich oder verschieden 0 oder 1 ist,
o ganzzahlige Werte von 0 bis 100000 annehmen kann und
m (o+2)+ bis (o+2)- sein kann.

5. Verfahren gemäß Anspruch 1, **dadurch gekennzeichnet, dass** das Iridium(III)-haltige Edukt eine Struktur gemäß der Formel (VIII) enthält, 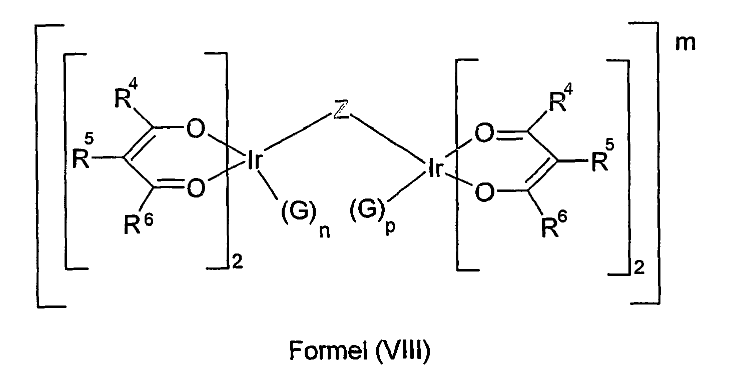 wobei die Symbole und Indizes R⁴, R⁵, R⁶, G, Z, n und p die Bedeutungen wie in Anspruch 1, 3 und 4 haben und worin
m 2+,1+, 0, 1- oder 2- ist.

6. Verfahren gemäß Anspruch 1, **dadurch gekennzeichnet, dass** das Iridium(III)-haltige Edukt eine Struktur der Formel (IX) enthält, 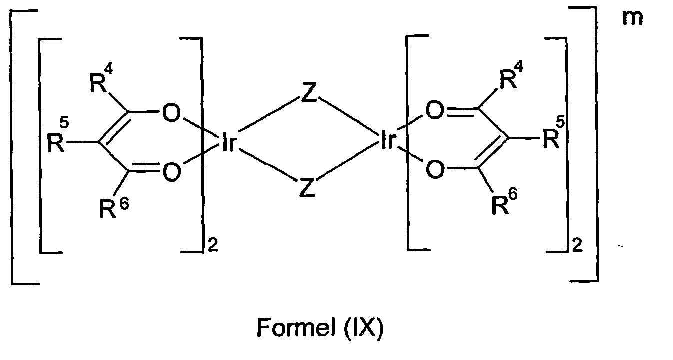 wobei die Symbole R¹, R², R⁴, R⁵, R⁶ und Z die Bedeutungen wie in Anspruch 1 und Anspruch 3 haben und worin
m 2+, 1+, 0, 1- oder 2- ist.

7. Verfahren gemäß Anspruch 1, **dadurch gekennzeichnet, dass** das Iridium(III)-haltige Edukt eine Struktur gemäß der Formel (X) enthält, 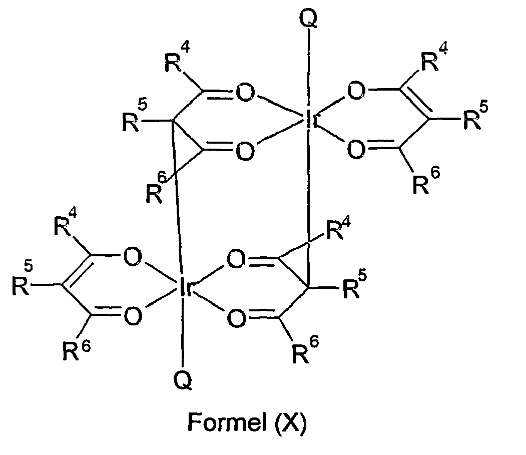 wobei die Symbole R⁴, R⁵ und R⁶ die Bedeutungen wie in Anspruch 1 haben und wobei
Q gleich oder verschieden bei jedem Auftreten ein monovalentes Anion ist.

8. Verfahren gemäß einem oder mehreren der Ansprüche 2, 4 und 5, **dadurch gekennzeichnet, dass** das Iridium(III)-haltige Edukt eine Verbindung der Formel (V), (VII) und/oder (VIII) enthält und X bei jedem Auftreten gleich oder verschieden OH⁻, F⁻, Cl⁻, Br⁻, I⁻, SCN⁻, CN⁻, SH⁻, SeH⁻, ein Alkoholat der Formel R¹O⁻, Nitrat⁻, ein Carboxylat der Formel R¹COO⁻, Cyclopentadienid (C₅H₅⁻) oder Hydrid (H⁻) ist.

9. Verfahren gemäß einem oder mehreren der Ansprüche 2, 4 und 5, **dadurch gekennzeichnet, dass** das Iridium(III)-haltige Edukt eine Verbindung der Formel (V), (VII) und/oder (VIII) enthält und Y bei jedem Auftreten gleich oder verschieden H₂O, H₂S, ein Dialkylsulfid der Formel (R¹)₂S, ein Thiol der Formel R¹SH, ein Alkohol der Formel R¹OH, ein Ether der Formel (R¹)₂O, ein Dialkylsulfoxid (R¹)₂SO, NH₃, ein primäres, sekundäres oder tertiäres Amin, Pyridin, Chinolin, ein Nitril der Formel R¹CN, CO, ein Phosphin der Formel P(R¹)₃, ein Phosphinoxid der Formel OP(R¹)₃, ein Arsin der Formel As(R¹)₃ oder ein Phosphit der Formel P(OR¹)₃ ist.

10. Verfahren gemäß einem oder mehreren der Ansprüche 3, 4, 5 und 6, **dadurch gekennzeichnet, dass** das Iridium(III)-haltige Edukt eine Verbindung der Formel (VI), (VII), (VIII) und/oder (IX) enthält und Z⁰ bei jedem Auftreten gleich oder verschieden Bipyridin, Phenanthrolin, Ethylendiamin, Propylendiamin oder 2-, 3- bzw. 4-Aminopyridin ist.

11. Verfahren gemäß einem oder mehreren der Ansprüche 3, 4, 5 und 6, **dadurch gekennzeichnet, dass** das Iridium(III)-haltige Edukt eine Verbindung der Formel (VI), (VII), (VIII) und/oder (IX) enthält und Z¹ bei jedem Auftreten gleich oder verschieden Diketonat, Carboxylat, Picolinat, Aminocarboxylat, 1-Ketoalkoholate, Azid, Cyanat, Isocyanat, Thiocyanat, Isothiocyanat, Chlorid, Bromid und Iodid ist.

12. Verfahren gemäß einem oder mehreren der Ansprüche 3, 4, 5 und 6, **dadurch gekennzeichnet, dass** das Iridium(III)-haltige Edukt eine Verbindung der Formel (VI), (VII), (VIII) und/oder (IX) enthält und Z¹ bei jedem Auftreten gleich oder verschieden Acetylacetonat oder Acetat ist.

13. Verfahren gemäß einem oder mehreren der Ansprüche 3, 4, 5 und 6, **dadurch gekennzeichnet, dass** das Iridium(III)-haltige Edukt eine Verbindung der Formel (VI), (VII), (VIII) und/oder (IX) enthält und Z² bei jedem Auftreten gleich oder verschieden Oxalat, Maleonat, Phthalat, *iso-*Phthalat, Terephthalat, Oxid oder Peroxid ist.

14. Verfahren gemäß Anspruch 1 und/oder Anspruch 7, **dadurch gekennzeichnet, dass** das Iridium(III)-haltige Edukt ein Verbindung gemäß der Formel (X) enthält, wobei Q CI, Br, 1 oder ein Diketonat ist.

15. Verfahren gemäß Anspruch 1 und/oder Anspruch 2, **dadurch gekennzeichnet, dass** das Iridium(III)-haltige Edukt eine Verbindung gemäß der Formel (V) enthält, wobei X gleich oder verschieden bei jedem Auftreten ein CI-, Br- oder 1-Anion ist.

16. Verfahren gemäß einem oder mehreren der Ansprüche 1, 2 und/oder 15, **dadurch gekennzeichnet, dass** das Iridium(III)-haltige Edukt eine Verbindung der Formel (XI) enthält, 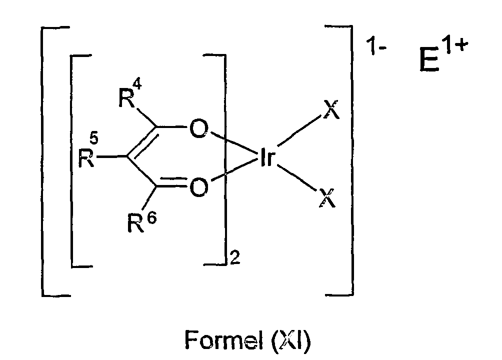 wobei R¹, R², R⁴, R⁵ und R⁶ die in Anspruch 1 angegebenen Bedeutungen haben, X gleich oder verschieden bei jedem Auftreten ein Cl-, Br- oder I-Anion ist und E ein Alkalikation, Ammonium- oder Phosphoniumion ist.

17. Verfahren gemäß einem oder mehreren der Ansprüche 1 bis 16, **dadurch gekennzeichnet, dass** das eingesetzte Iridium(III)-haltige Edukt ein Gemisch von mindestens 2 Iridium(III)-haltigen Edukten der Formel (II), bzw. (V) bis (XI) enthält.

18. Verfahren gemäß einem oder mehreren der Ansprüche 1 bis 16, **dadurch gekennzeichnet, dass** das eingesetzte Edukt ein Gemisch ist, das mindestens ein Iridium(III)-haltiges Edukt der Formel (II), bzw. (V) bis (XI) enthält.

## Claims

1. Process for the preparation of homoleptic Ir(III) complexes of the formula (I) 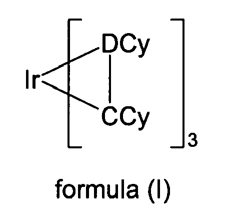 in which:
CyD is a cyclic group which contains at least one donor atom via which the cyclic group is bonded to the metal and which may in turn carry one or more substituents R; the groups CyD and CyC are connected to one another via a covalent bond;
CyC is a cyclic group which contains a carbon atom via which the cyclic group is bonded to the metal and which may in turn carry one or more substituents R;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -S-, -NR¹-, -CONR²-, -CO-O-, -CR¹=CR¹- or -C≡C- and in which one or more H atoms may be replaced by F, or an aryl or heteroaryl group having 4 to 14 C atoms, which may be substituted by one or more non-aromatic radicals R; where a plurality of substituents R, both on the same ring and also on the two different rings, may together in turn form a further mono- or polycyclic, aliphatic or aromatic ring system;
R¹ and R² are, identically or differently on each occurrence, H or an aliphatic or aromatic hydrocarbon radical having 1 to 20 C atoms,
**characterised by** the reaction of an iridium(III)-containing starting material which contains at least one diketonate structural unit of the formula (II) 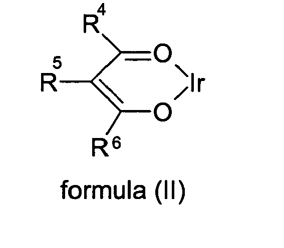 in which:
R⁴, R⁶ are, identically or differently on each occurrence, a linear, branched or cyclic alkyl group having 1-20 carbon atoms, in which one or more non-adjacent CH₂ groups may be replaced by -O-, -S-, -NR¹-, -CONR²-, -CO-O-, -CR¹=CR¹- or -C≡C- and in which one or more H atoms may be replaced by F or aromatic groups, each having 3 to 14 C atoms, or an aryl and/or heteroaryl group having 3-20 carbon atoms or an alkoxy group OR¹,
R⁵ is, identically or differently on each occurrence, a linear or branched alkyl group having 1-20 carbon atoms, in which one or more non-adjacent CH₂ groups may be replaced by -O- -S-, -NR¹-, -CONR²-, -CO-O-, -CR¹=CR¹- or -C=C- and in which one or more H atoms may be replaced by F or aromatic groups, each having 3 to 14 C atoms, or an aryl and/or heteroaryl group having 3-20 carbon atoms,
R¹ and R² are, identically or differently on each occurrence, H or an aliphatic or aromatic hydrocarbon radical having 1 to 20 C atoms,
with the exception of homoleptic diketonate complexes of the formula (II) and compounds of the formula (II) which contain two ligands of the formula (III) 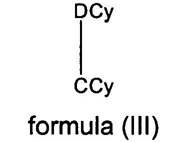 where the symbols CyC and CyD in formula (III) have the meanings mentioned under formula (I),
with a compound of the formula (IV) 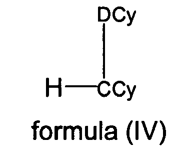 in which the symbols CyD and CyC have the meanings mentioned under formula (I).

2. Process according to Claim 1, **characterised in that** the iridium(III)-containing starting material contains a structure of the formula (V) 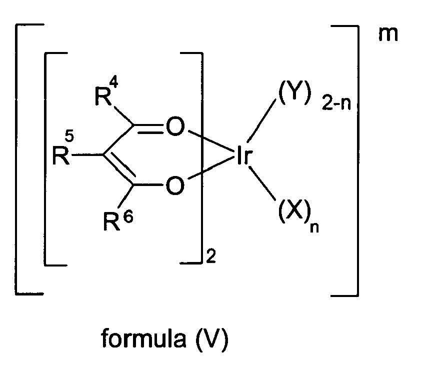 where the symbols R⁴, R⁵, R⁶ have the meanings as in Claim 1,
X is on each occurrence, identically or differently, a monovalent anion,
Y is on each occurrence, identically or differently, a neutral monodentate ligand,
n is 0, 1 or 2 and
m is 1- for n = 2, is 0 for n = 1 or is 1+ for n = 0.

3. Process according to Claim 1, **characterised in that** the iridium(III)-containing starting material contains a structure of the formula (VI) 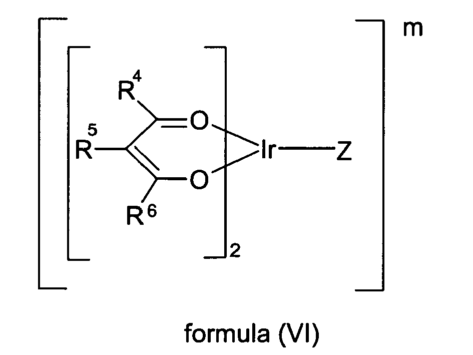 where R⁴, R⁵, R⁶ have the meanings as in Claim 1 and where
Z is, identically or differently on each occurrence,
a neutral bidentate and/or bridging ligand Z⁰,
a monoanionic bidentate and/or bridging ligand Z¹
or a dianionic bidentate and/or bridging ligand Z², and
m is 1 + for Z = Z⁰, is 0 for Z = Z¹ and is 1- for Z = Z².

4. Process according to Claim 1, **characterised in that** the iridium(III)-containing starting material contains a structure of the formula (VII) 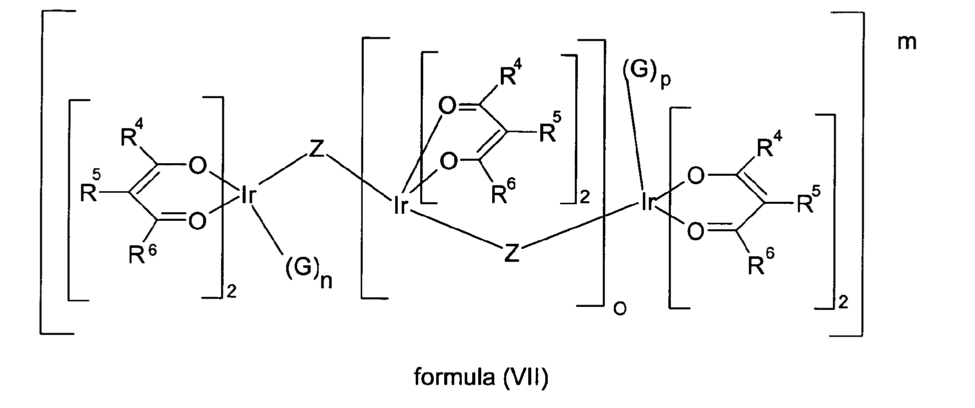 where R⁴, R⁵, R⁶ and Z have the meanings as in Claim 1 and Claim 3,
G is, identically or differently on each occurrence, either a monovalent anion X or a neutral monodentate ligand Y,
n, p are on each occurrence, identically or differently, 0 or 1,
o can adopt integer values from 0 to 100,000 and
m can be (o+2)+ to (o+2)-.

5. Process according to Claim 1, **characterised in that** the iridium(III)-containing starting material contains a structure of the formula (VIII) 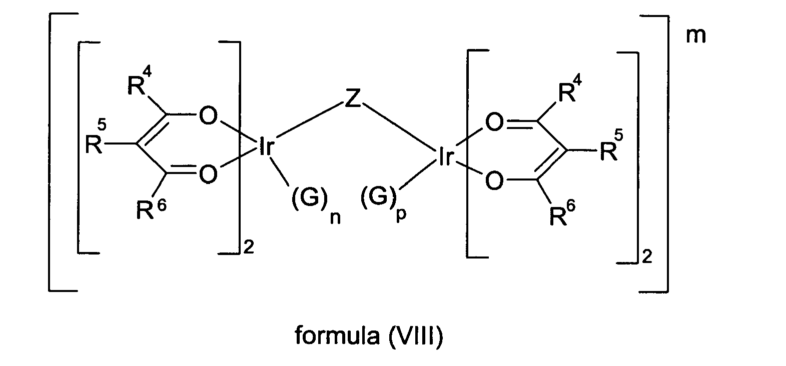 where the symbols and indices R⁴, R⁵, R⁶, G, Z, n and p have the meanings as in Claims 1, 3 and 4 and in which
m is 2+, 1 +, 0, 1- or 2-.

6. Process according to Claim 1, **characterised in that** the iridium(III)-containing starting material contains a structure of the formula (IX) 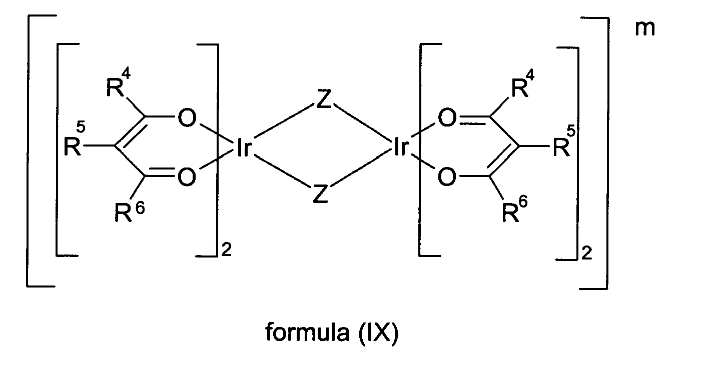 where the symbols R¹, R², R⁴, R⁵, R⁶ and Z have the meanings as in Claim 1 and Claim 3 and in which
m is 2+, 1+, 0, 1- or 2-.

7. Process according to Claim 1, **characterised in that** the iridium(III)-containing starting material contains a structure of the formula (X) 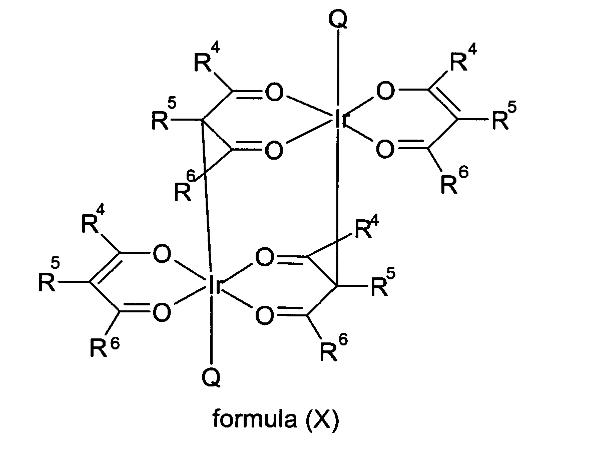 where the symbols R⁴, R⁵ and R⁶ have the meanings as in Claim 1 and where
Q is, identically or differently on each occurrence, a monovalent anion.

8. Process according to one or more of Claims 2, 4 and 5, **characterised in that** the iridium(III)-containing starting material comprises a compound of the formula (V), (VII) and/or (VIII) and X is on each occurrence, identically or differently, OH⁻, F⁻, Cl⁻, Br⁻, I⁻, SCN⁻, CN⁻, SH⁻, SeH⁻, an alkoxide of the formula R¹O⁻, nitrate⁻, a carboxylate of the formula R¹COO⁻, cyclopentadienide (C₅H₅⁻) or hydride (H⁻).

9. Process according to one or more of Claims 2, 4 and 5, **characterised in that** the iridium(III)-containing starting material comprises a compound of the formula (V), (VII) and/or (VIII) and Y is on each occurrence, identically or differently, H₂O, H₂S, a dialkyl sulfide of the formula (R¹)₂S, a thiol of the formula R¹SH, an alcohol of the formula R¹OH, an ether of the formula (R¹)₂O, a dialkyl sulfoxide (R¹)₂SO, NH₃, a primary, secondary or tertiary amine, pyridine, quinoline, a nitrile of the formula R¹CN, CO, a phosphine of the formula P(R¹)₃, a phosphine oxide of the formula OP(R¹)₃, an arsine of the formula As(R¹)₃ or a phosphite of the formula P(OR¹)₃.

10. Process according to one or more of Claims 3, 4, 5 and 6, **characterised in that** the iridium(III)-containing starting material comprises a compound of the formula (VI), (VII), (VIII) and/or (IX) and Z⁰ is on each occurrence, identically or differently, bipyridine, phenanthroline, ethylenediamine, propylenediamine or 2-, 3- or 4-aminopyridine.

11. Process according to one or more of Claims 3, 4, 5 and 6, **characterised in that** the iridium(III)-containing starting material comprises a compound of the formula (VI), (VII), (VIII) and/or (IX) and Z¹ is on each occurrence, identically or differently, diketonate, carboxylate, picolinate, aminocarboxylate, 1-ketoalcoholates, azide, cyanate, isocyanate, thiocyanate, isothiocyanate, chloride, bromide and iodide.

12. Process according to one or more of Claims 3, 4, 5 and 6, **characterised in that** the iridium(III)-containing starting material comprises a compound of the formula (VI), (VII), (VIII) and/or (IX) and Z¹ is on each occurrence, identically or differently, acetylacetonate or acetate.

13. Process according to one or more of Claims 3, 4, 5 and 6, **characterised in that** the iridium(III)-containing starting material comprises a compound of the formula (VI), (VII), (VIII) and/or (IX) and Z² is on each occurrence, identically or differently, oxalate, maleonate, phthalate, isophthalate, terephthalate, oxide or peroxide.

14. Process according to Claim 1 and/or Claim 7, **characterised in that** the iridium-(III)-containing starting material comprises a compound of the formula (X) in which Q is Cl, Br, I or a diketonate.

15. Process according to Claim 1 and/or Claim 2, **characterised in that** the iridium-(III)-containing starting material comprises a compound of the formula (V) in which X is, identically or differently on each occurrence, a Cl, Br or I anion.

16. Process according to one or more of Claims 1, 2 and/or 15, **characterised in that** the iridium(III)-containing starting material comprises a compound of the formula (XI) 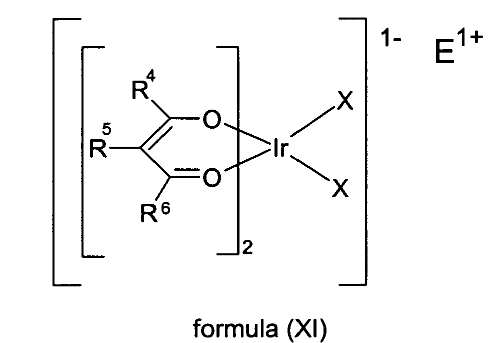 where R¹, R², R⁴, R⁵ and R⁶ have the meanings indicated in Claim 1, X is, identically or differently on each occurrence, a Cl, Br or I anion, and E is an alkali metal cation, ammonium ion or phosphonium ion.

17. Process according to one or more of Claims 1 to 16, **characterised in that** the iridium(III)-containing starting material employed comprises a mixture of at least two iridium(III)-containing starting materials of the formulae (II) or (V) to (XI).

18. Process according to one or more of Claims 1 to 16, **characterised in that** the starting material employed is a mixture which comprises at least one iridium(III)-containing starting material of the formulae (II) or (V) to (XI).

## Revendications

1. Procédé de préparation de complexes homoleptiques d'Ir(III) de formule (I) 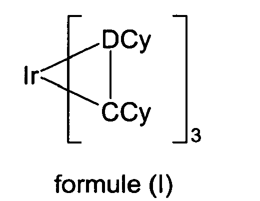 dans laquelle :
CyD est un groupement cyclique qui contient au moins un atome donneur par l'intermédiaire duquel le groupement cyclique est lié au métal et qui peut à son tour porter un ou plusieurs substituants R ; les groupements CyD et CyC sont reliés l'un à l'autre par une liaison covalente ;
CyC est un groupement cyclique qui contient un atome de carbone par l'intermédiaire duquel le groupement cyclique est lié au métal et qui peut à son tour porter un ou plusieurs substituants R ;
R est, de manière identique ou différente à chaque occurrence, H, F, Cl, Br, I, NO₂, CN, un groupement alkyle ou alcoxy à chaîne linéaire ou ramifiée, ou cyclique, ayant 1 à 20 atomes de C, dans lequel un ou plusieurs groupements CH₂ non adjacents peuvent être remplacés par -O-, -S-, -NR¹-, -CONR²-, -CO-O-, -CR¹=CR¹- ou -C≡C- et dans lequel un ou plusieurs atomes de H peuvent être remplacés par F, ou un groupement aryle ou hétéroaryle ayant 4 à 14 atomes de C, pouvant être substitué par un ou plusieurs radicaux R non aromatiques ; où une pluralité de substituants R, tant sur le même cycle qu'également sur les deux cycles différents, peuvent ensemble à leur tour former un noyau mono- ou polycyclique, aliphatique ou aromatique supplémentaire ;
R¹ et R² sont, de manière identique ou différente à chaque occurrence, H ou un radical hydrocarboné aliphatique ou aromatique ayant 1 à 20 atomes de C,
**caractérisé par** la réaction d'un produit de départ contenant de l'iridium(III) contenant au moins un motif structural de dicétonate de formule (II) 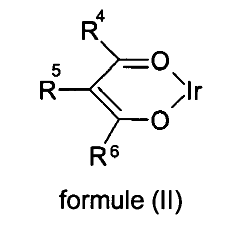 dans laquelle :
R⁴, R⁶ sont, de manière identique ou différente à chaque occurrence, un groupement alkyle linéaire, ramifié ou cyclique ayant 1-20 atomes de carbone, dans lequel un ou plusieurs groupements CH₂ non adjacents peuvent être remplacés par -O-, -S-, -NR¹-, -CONR²-, -CO-O-, -CR¹=CR¹- ou -C≡C- et dans lequel un ou plusieurs atomes de H peuvent être remplacés par F ou des groupements aromatiques, ayant chacun 3 à 14 atomes de C, ou un groupement aryle et/ou hétéroaryle ayant 3-20 atomes de carbone ou un groupement alcoxy OR¹,
R⁵ est, de manière identique ou différente à chaque occurrence, un groupement alkyle linéaire ou ramifié ayant 1-20 atomes de carbone, dans lequel un ou plusieurs groupements CH₂ non adjacents peuvent être remplacés par -O-, -S-, -NR¹-, -CONR²-, -CO-O-, -CR¹=CR¹- ou -C≡C- et dans lequel un ou plusieurs atomes de H peuvent être remplacés par F ou des groupements aromatiques, ayant chacun 3 à 14 atomes de C, ou un groupement aryle et/ou hétéroaryle ayant 3-20 atomes de carbone,
R¹ et R² sont, de manière identique ou différente à chaque occurrence, H ou un radical hydrocarboné aliphatique ou aromatique ayant 1 à 20 atomes de C,
à l'exception des complexes de dicétonate homoleptiques de formule (II) et des composés de formule (II) contenant deux ligands de formule (III) 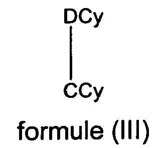 où les symboles CyC et CyD dans la formule (III) ont les significations mentionnées pour la formule (I),
avec un composé de formule (IV) 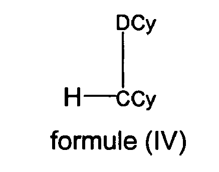 dans laquelle les symboles CyD et CyC ont les significations mentionnées pour la formule (I).

2. Procédé selon la revendication 1, **caractérisé en ce que** le produit de départ contenant de l'iridium(Ill) contient une structure de formule (V) 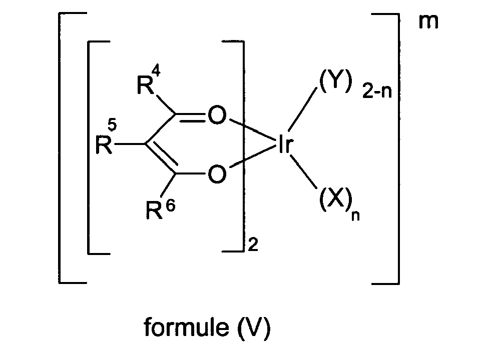 où les symboles R⁴, R⁵, R⁶ ont les significations selon la revendication 1,
X est à chaque occurrence, de manière identique ou différente, un anion monovalent,
Y est à chaque occurrence, de manière identique ou différente, un ligand monodenté neutre,
n vaut 0, 1 ou 2 et
m vaut 1- pour n = 2, vaut 0 pour n = 1 ou vaut 1+ pour n = 0.

3. Procédé selon la revendication 1, **caractérisé en ce que** le produit de départ contenant de l'iridium(III) contient une structure de formule (VI) 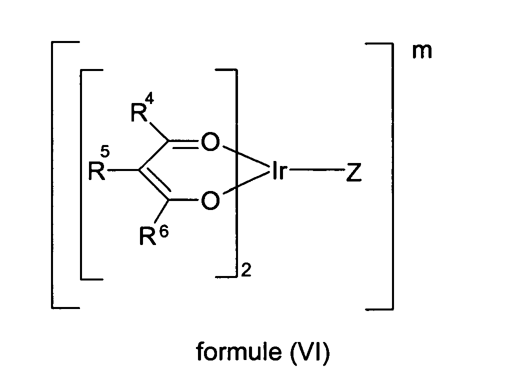 où R⁴, R⁵, R⁶ ont les significations selon la revendication 1 et où
Z est, de manière identique ou différente à chaque occurrence,
un ligand Z⁰ de pontage et/ou bidenté neutre,
un ligand Z¹ de pontage et/ou bidenté monoanionique
ou un ligand Z² de pontage et/ou bidenté dianionique, et
m vaut 1 + pour Z = Z⁰, vaut 0 pour Z = Z¹ et vaut 1- pour Z = Z².

4. Procédé selon la revendication 1, **caractérisé en ce que** le produit de départ contenant de l'iridium(III) contient une structure de formule (VII) 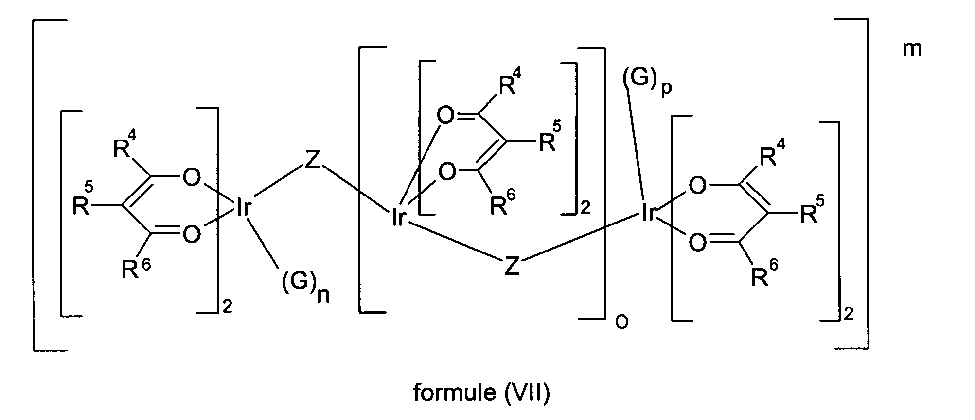 où R⁴, R⁵, R⁶ et Z ont les significations selon la revendication 1 et la revendication 3,
G est, de manière identique ou différente à chaque occurrence, soit un anion monovalent X, soit un ligand monodenté neutre Y,
n, p valent à chaque occurrence, de manière identique ou différente, 0 ou 1,
o peut adopter des valeurs de nombre entier allant de 0 à 100 000 et
m peut aller de (o+2)+ à (o+2)-.

5. Procédé selon la revendication 1, **caractérisé en ce que** le produit de départ contenant de l'iridium(III) contient une structure de formule (VIII) 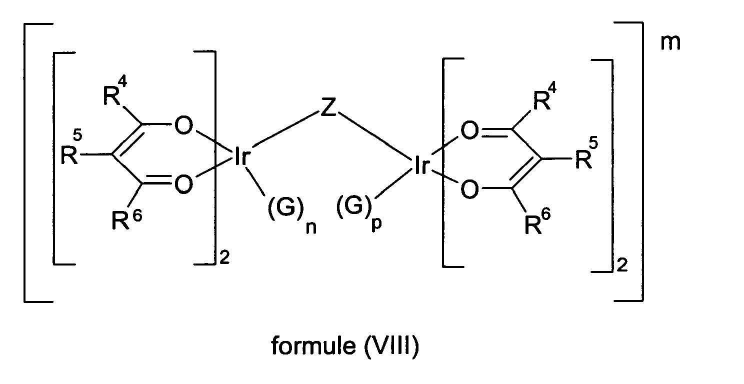 où les symboles et les indices R⁴, R⁵, R⁶, G, Z, n et p ont les significations selon les revendications 1, 3 et 4 et dans laquelle
m vaut 2+, 1 +, 0, 1- ou 2-.

6. Procédé selon la revendication 1, **caractérisé en ce que** le produit de départ contenant de l'iridium(III) contient une structure de formule (IX) 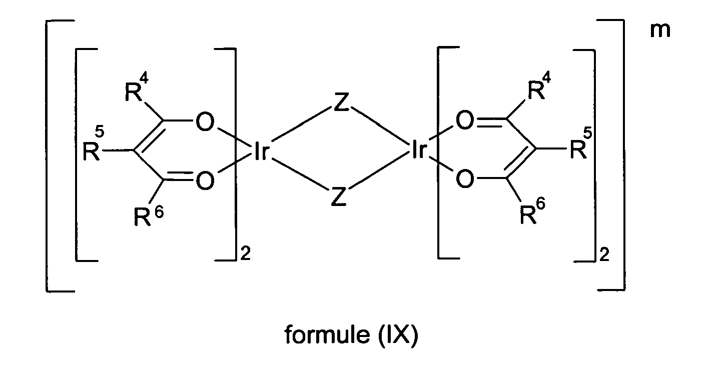 où les symboles R¹, R², R⁴, R⁵, R⁶ et Z ont les significations selon la revendication 1 et la revendication 3 et dans laquelle
m vaut 2+, 1 +, 0, 1- ou 2-.

7. Procédé selon la revendication 1, **caractérisé en ce que** le produit de départ contenant de l'iridium(III) contient une structure de formule (X) 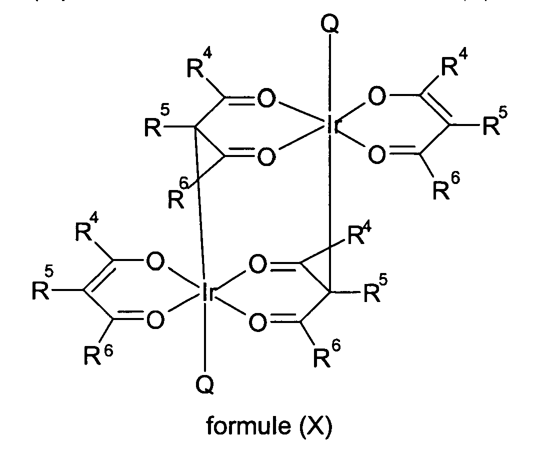 où les symboles R⁴, R⁵ et R⁶ ont les significations selon la revendication 1 et où
Q est, de manière identique ou différente à chaque occurrence, un anion monovalent.

8. Procédé selon une ou plusieurs parmi les revendications 2, 4 et 5, **caractérisé en ce que** le produit de départ contenant de l'iridium(III) comprend un composé de formule (V), (VII) et/ou (VIII) et X est à chaque occurrence, de manière identique ou différente, OH⁻, F⁻, Cl⁻, Br⁻, I⁻, SCN⁻, CN⁻, SH⁻, SeH⁻, un alcoolate de formule R¹O-, nitrate-, un carboxylate de formule R¹COO⁻, cyclopentadiénide (C₅H₅⁻) ou hydride (H⁻).

9. Procédé selon une ou plusieurs parmi les revendications 2, 4 et 5, **caractérisé en ce que** le produit de départ contenant de l'iridium(III) comprend un composé de formule (V), (VII) et/ou (VIII) et Y est à chaque occurrence, de manière identique ou différente, H₂O, H₂S, un sulfure de dialkyle de formule (R¹)₂S, un thiol de formule R¹SH, un alcool de formule R¹OH, un éther de formule (R¹)₂O, un dialkylsulfoxyde (R¹)₂SO, NH₃, une amine primaire, secondaire ou tertiaire, pyridine, quinoléine, un nitrile de formule R¹CN, CO, une phosphine de formule P(R¹)₃, un oxyde de phosphine de formule OP(R¹)₃, une arsine de formule As(R¹)₃ ou un phosphite de formule P(OR¹)₃.

10. Procédé selon une ou plusieurs parmi les revendications 3, 4, 5 et 6, **caractérisé en ce que** le produit de départ contenant de l'iridium(III) comprend un composé de formule (VI), (VII), (VIII) et/ou (IX) et Z⁰ est à chaque occurrence, de manière identique ou différente, bipyridine, phénanthroline, éthylènediamine, propylène-diamine ou 2-, 3- ou 4-aminopyridine.

11. Procédé selon une ou plusieurs parmi les revendications 3, 4, 5 et 6, **caractérisé en ce que** le produit de départ contenant de l'iridium(III) comprend un composé de formule (VI), (VII), (VIII) et/ou (IX) et Z¹ est à chaque occurrence, de manière identique ou différente, dicétonate, carboxylate, picolinate, aminocarboxylate, 1-cétoalcoolates, azoture, cyanate, isocyanate, thiocyanate, isothiocyanate, chlorure, bromure et iodure.

12. Procédé selon une ou plusieurs parmi les revendications 3, 4, 5 et 6, **caractérisé en ce que** le produit de départ contenant de l'iridium(III) comprend un composé de formule (VI), (VII), (VIII) et/ou (IX) et Z¹ est à chaque occurrence, de manière identique ou différente, acétylacétonate ou acétate.

13. Procédé selon une ou plusieurs parmi les revendications 3, 4, 5 et 6, **caractérisé en ce que** le produit de départ contenant de l'iridium(III) comprend un composé de formule (VI), (VII), (VIII) et/ou (IX) et Z² est à chaque occurrence, de manière identique ou différente, oxalate, maléonate, phtalate, isophtalate, téréphtalate, oxyde ou peroxyde.

14. Procédé selon la revendication 1 et/ou la revendication 7, **caractérisé en ce que** le produit de départ contenant de l'iridium(III) comprend un composé de formule (X) dans laquelle Q est Cl, Br, I ou un dicétonate.

15. Procédé selon la revendication 1 et/ou la revendication 2, **caractérisé en ce que** le produit de départ contenant de l'iridium(III) comprend un composé de formule (V) dans laquelle X est, de manière identique ou différente à chaque occurrence, un anion de Cl, de Br ou d'I.

16. Procédé selon une ou plusieurs parmi les revendications 1, 2 et/ou 15, **caractérisé en ce que** le produit de départ contenant de l'iridium(III) comprend un composé de formule (XI) 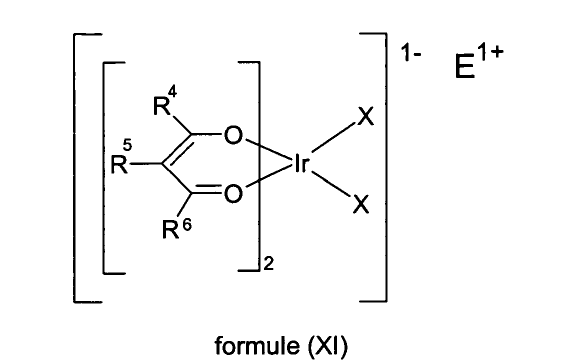 où R¹, R², R⁴, R⁵ et R⁶ ont les significations indiquées selon la revendication 1, X est, de manière identique ou différente à chaque occurrence, un anion de Cl, de Br ou d'I, et E est un cation de métal alcalin, un ion ammonium ou un ion phosphonium.

17. Procédé selon une ou plusieurs parmi les revendications 1 à 16, **caractérisé en ce que** le produit de départ contenant de l'iridium(III) employé comprend un mélange d'au moins deux produits de départ contenant de l'iridium(III) de formules (II) ou (V) à (XI).

18. Procédé selon une ou plusieurs parmi les revendications 1 à 16, **caractérisé en ce que** le produit de départ employé est un mélange qui comprend au moins un produit de départ contenant de l'iridium(III) de formules (II) ou (V) à (XI).
